# EUROPEAN PATENT SPECIFICATION

(11) **EP 4 232 347 B1**
(45) Date of publication and mention of the grant of the patent: **10.07.2024**
(21) Application number: 21806362.6
(22) Date of filing: 19.10.2021
(51) Int. Cl.: B62D 57/032

(54) **ADAPTIVE ROBOTIC FOOT**
ADAPTIVER ROBOTERFUSS
PIED ROBOTIQUE ADAPTATIF

(30) Priority: 20.10.2020 IT 202000024721
(43) Date of publication of application: 30.08.2023
(73) Proprietor: Università di Pisa, 56124 Pisa (IT); Fondazione Istituto Italiano di Tecnologia, 16163 Genova (IT); QBRobotics S.r.l., 56023 Cascina (Pisa) (IT); Eidgenössische Technische Hochschule Zürich, 8092 Zürich (CH)
(72) Inventor: HUTTER, Marco, 9230 Flawil (CH); PERSICHINI, Riccardo, 01014 Montalto di Castro (IT); BONOMO, Fabio, 56125 Pisa (IT); VALSECCHI, Giorgio, 8037 Zurich (CH); CATALANO, Manuel Giuseppe, 56124 Pisa (IT); GRIOLI, Giorgio, 56124 Pisa (IT); PETROCELLI, Cristiano, 56124 Pisa (IT); POLLAYIL, Mathew Jose, 59100 Pisa (IT); GARABINI, Manolo, 19020 Bolano (IT); BICCHI, Antonio, 54100 Massa (IT)
(74) Representative: Lunati & Mazzoni S.r.L.
(86) International application number: PCT/IB2021/059608
(87) International publication number: WO 2022/084845

(56) References cited:
- CN-A- 104 590 417
- CN-A- 108 927 796
- CN-A- 111 439 317
- CATALANO MANUEL G ET AL: "HRP-4 Walks on Soft Feet", IEEE ROBOTICS AND AUTOMATION LETTERS, IEEE, vol. 6, no. 2, 9 March 2020 (2020-03-09), pages 470 - 477, XP011830698, DOI: 10.1109/LRA.2020.2979630
- PIAZZA CRISTINA ET AL: "Toward an adaptive foot for natural walking", 2016 IEEE-RAS 16TH INTERNATIONAL CONFERENCE ON HUMANOID ROBOTS (HUMANOIDS), IEEE, 15 November 2016 (2016-11-15), pages 1204 - 1210, XP033036173, DOI: 10.1109/HUMANOIDS.2016.7803423
- JONG-TAE SEO ET AL: "Modeling and analysis of a biomimetic foot mechanism", INTELLIGENT ROBOTS AND SYSTEMS, 2009. IROS 2009. IEEE/RSJ INTERNATIONAL CONFERENCE ON, IEEE, PISCATAWAY, NJ, USA, 10 October 2009 (2009-10-10), pages 1472 - 1477, XP031580513, ISBN: 978-1-4244-3803-7
- VALSECCHI GIORGIO ET AL: "Quadrupedal Locomotion on Uneven Terrain With Sensorized Feet", IEEE ROBOTICS AND AUTOMATION LETTERS, IEEE, vol. 5, no. 2, 23 January 2020 (2020-01-23), pages 1548 - 1555, XP011770716, DOI: 10.1109/LRA.2020.2969160

## Description

The present invention relates to an adaptive robotic foot of the type specified in the preamble of the first claim.

The object of the present invention is to be identified in a foot that functionally adapts to the actions of a robot in order to give balance and stability to the robot. Currently, most robotic feet, such as flat ones with activated ankles, favour simplicity and robustness at the expense of a reduction in functionality.

In recent years, adaptive robotic feet have been developed, or rather able to change the shape of the foot to adapt to the ground, capable of giving greater stability and better perception of the ground.

A prime example of an adaptive robotic foot involves the use of inflatable balls or other delicate soft components. For example, CN202624435 introduces the possibility of making a flexible foot consisting of a flat part with rubber pads to absorb impacts; US2018311837 shows a mechanical embodiment of the sole of the foot divided into two parts; other examples involve the use of an airtight bag filled with granular material to be placed between the foot and the ground. The article "HRP-4 Walks on Soft Feet" of M. Catalano et al. discloses another type of adaptive robotic foot, provided with a deformable plantar surface.

The known technique described includes some important drawbacks.

In detail, the known adaptive feet are difficult to use in difficult external environments and/or on soft and deformable ground such as sand or snow. Therefore, the adaptive feet are not currently able to work on all terrains guaranteeing adequate stability.

Other drawbacks of the known adaptive robotic feet are, for example, to be identified in the mechanical complexity which determines high costs, high weights and design difficulties; in the complicated modelling that complicates their cleaty; in the complexities of control.

In this situation, the technical task underlying the present invention is to devise an adaptive robotic foot capable of substantially obviating at least part of the aforementioned drawbacks.

Within the scope of said technical task, an important object of the invention is to obtain an adaptive robotic foot that can be used in any condition.

Another important object of the invention is to provide an adaptive robotic foot which has relatively simple mechanics and therefore reduced costs, low weight and limited design and control difficulties.

The technical task and the specified aims are achieved by an adaptive robotic foot as claimed in the annexed claim 1. Examples of preferred embodiment are described in the dependent claims.

The characteristics and advantages of the invention are clarified below by the detailed description of preferred embodiments of the invention, with reference to the accompanying drawings, in which:
the **Fig. 1** shows, in scale, a possible application of the robotic foot according to the invention;
the **Fig. 2** illustrates, in scale, a second view of Fig. 1;
the **Fig. 3** shows, in scale, an exploded view of the robot foot according to the invention;

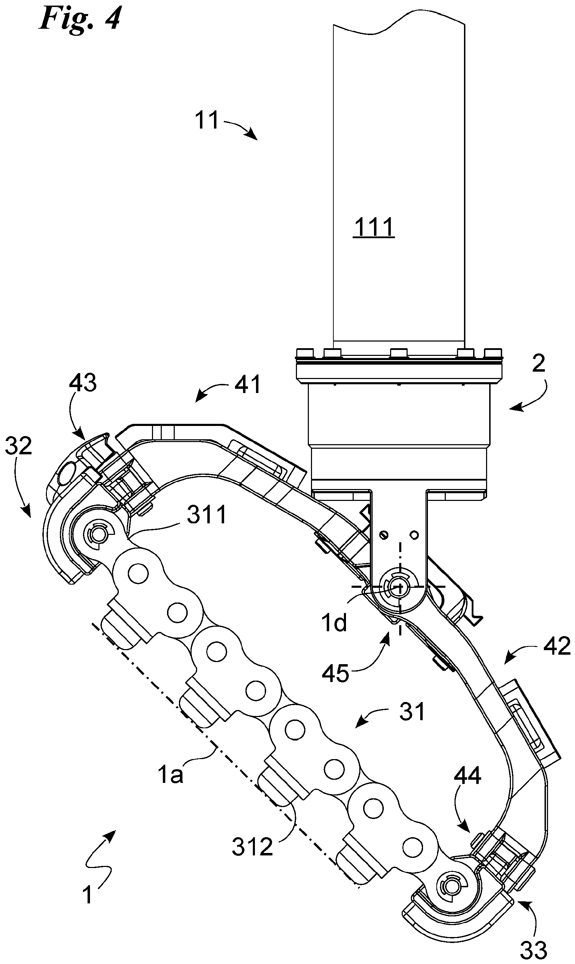

the **Fig. 4** shows, in scale, the robotic foot in a different position;

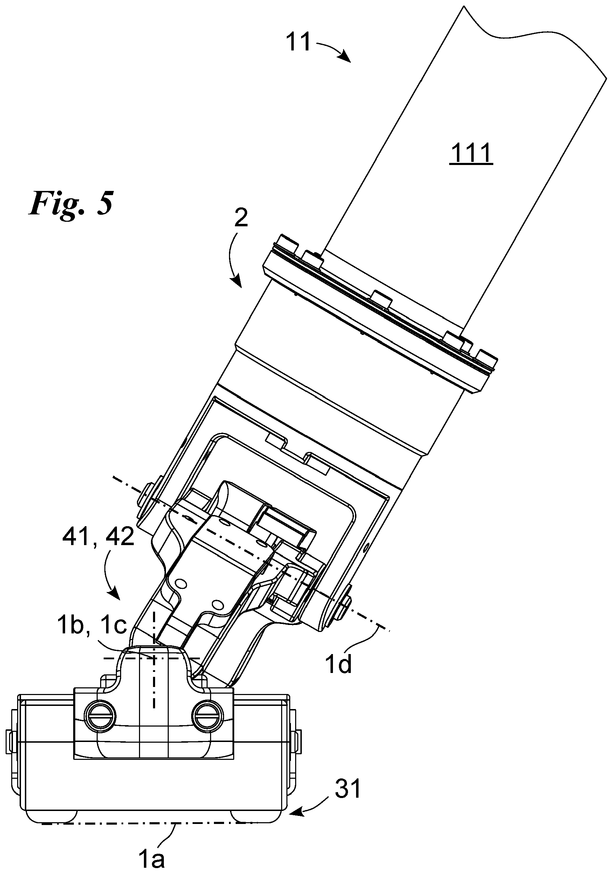

the **Fig. 5** illustrates, in scale, the robotic foot in a further position;

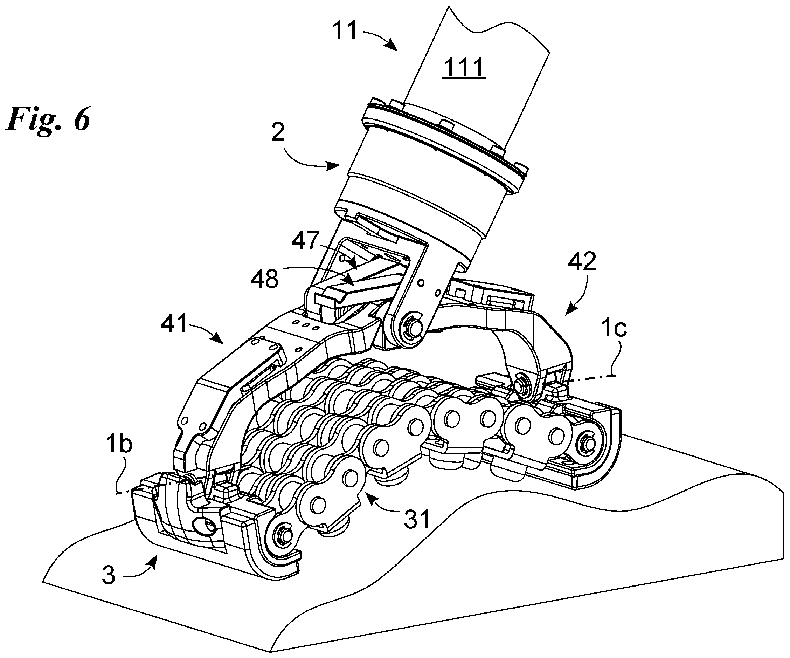

the **Fig. 6** shows, in scale, the robotic foot in a third position; and
the **Fig. 7** shows, in scale, a possible robot comprising more robotic foot according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

The measurements and data reported in this text are to be considered, unless otherwise indicated, as performed in the International Standard Atmosphere ICAO (ISO 2533:1975).

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

With reference to the figures, the adaptive robotic foot according to the invention is globally indicated with the number **1.**

It is adapted to be constrained to an external object and preferably to a robot **10.** The robotic foot 1 defines a contact area **1a** of the foot 1 and therefore of said object external to a support surface. The support surface can be defined by a ground, a rock, a road or other structure on which the foot 1 can rest.

As described in detail below, the contact area 1a can have a flat profile (or rather be flat) or a deformed profile or rather be bent and/or curved due, for example, to its contact with an irregular support surface.

The robotic foot 1 defines a front face and a rear face. The contact area 1a extends from said front face to said rear face. In detail, it mainly extends from the front to the rear face.

Preferably the robotic foot 1 can be used in robotics. It can therefore be part of a robot 10.

The robot 10 can comprise at least one module and in detail a plurality of mutually movable modules so as to allow said robot 10 to perform at least one operation and/or to move on a support surface.

In particular, the robot 10 can comprise at least one module identifying a limb 11 configured to rest and therefore unload the weight of the robot 10 on a support surface and/or to allow said robot to move along said support surface.

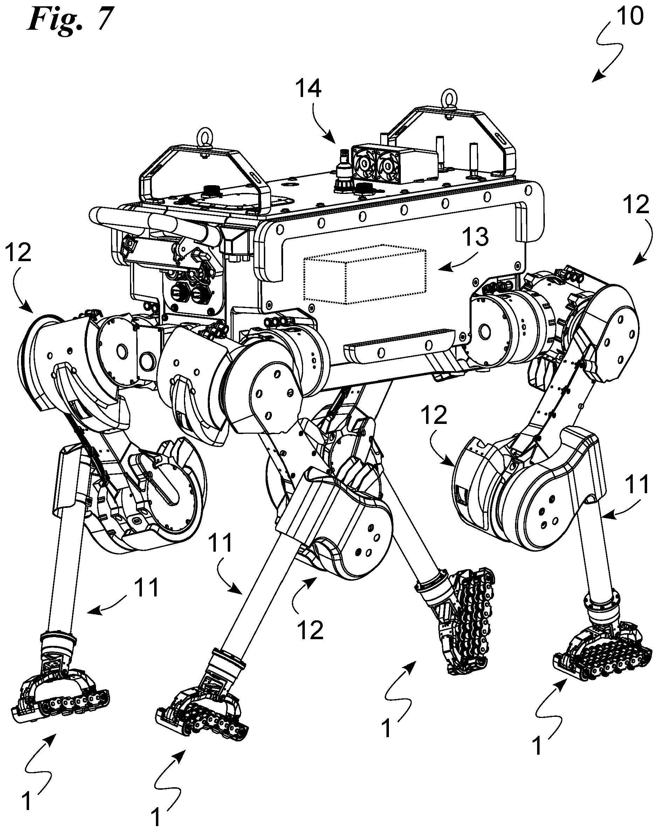

Preferably, the robot 10 can comprise several modules identifying limbs 11. For example, Fig. 7 shows a robot 10 comprising four modules each identifying a limb 11 and a fifth module identifying the central body of the robot 10 to which said limbs 11 are connected.

Each limb 11 can comprise at least one robotic foot 1.

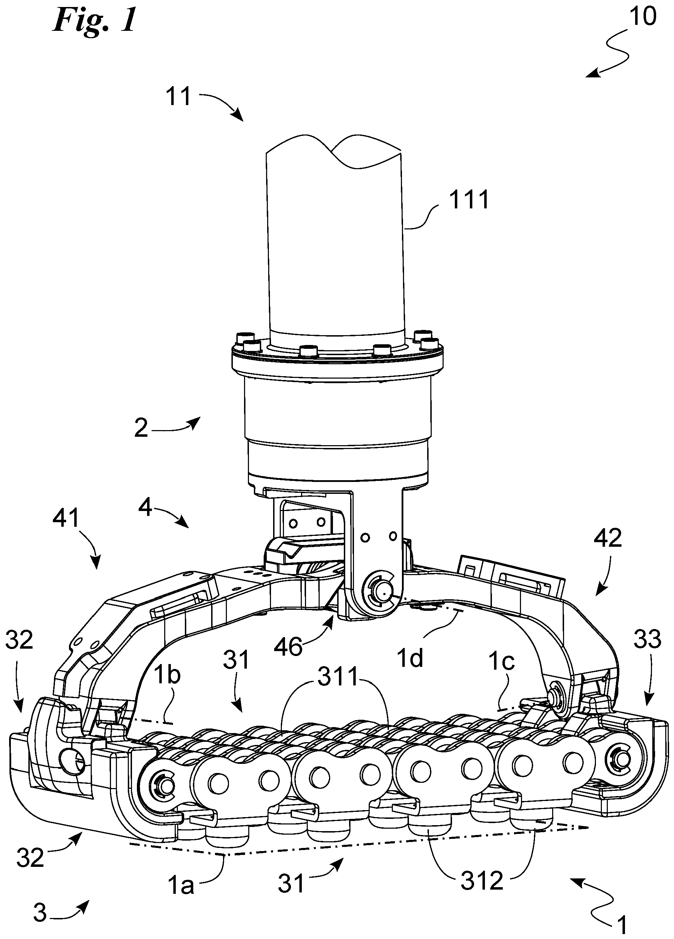

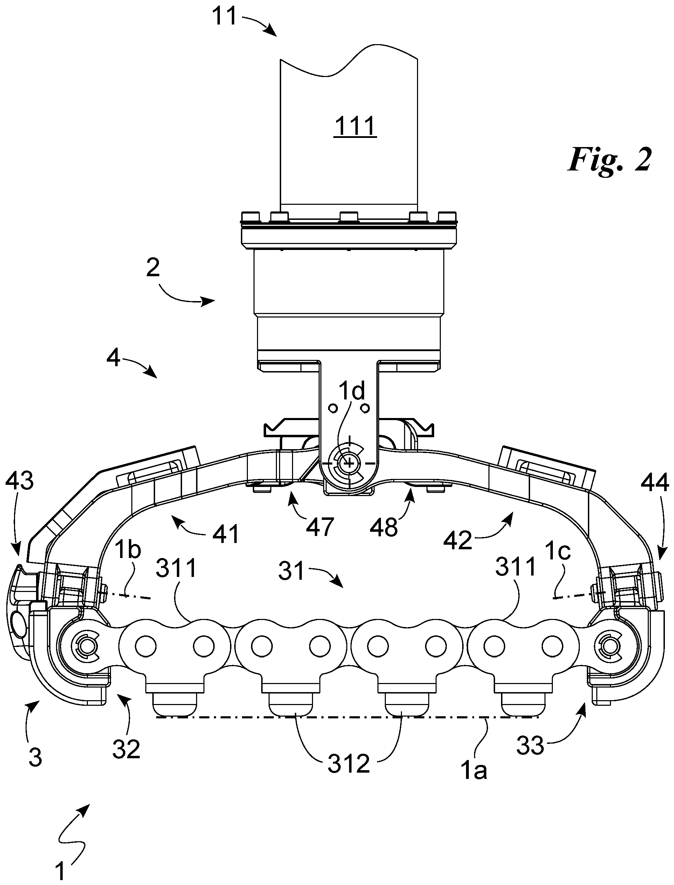

Each limb 11, illustrated in Figs. 1 and 2, can comprise an anchoring body **111** of the robotic foot 1 to the rest of the lower limb 11 and therefore of the robot 10.

It is highlighted how the robot 10 can comprise, in addition to modules identifying a limb 11, modules configured to perform other functions such as identifying additional limbs such as gripping and/or handling of an object. For example, in an anthropomorphic robot the robot 10 can comprise two modules each identifying a limb 11; two modules each identifying an additional limb (in detail an upper limb); a module identifying the torso and a module identifying the head of said robot 10.

The robot 10 can comprise at least one motor **12** for actuating said module.

The motor 12 can be configured to move the module with respect to a different module and in particular at least one module identifying the limb 11 with respect to the rest of the robot 10 so as to allow said robot 10 to move on said support surface. In some cases, the motor 12 can be configured to actuate at least one module allowing it to perform an operation such as a gripping.

The motor 12 can be electric.

The robot 10 can comprise a control unit **13** of the robot 10 and in particular of the at least one motor 12.

The robot 10 can comprise a power supply system **14** of the robot such as a battery and/or a connection to an external network.

The robotic foot 1 comprises an attachment **2,** preferably integral, of the foot 1 to an external object, in detail to the robot 10, in more detail to the limb 11 and more in detail still to the anchoring body 111.

The robotic foot 1 comprises a contact organ **3** defining the contact area 1a.

The contact organ 3 is configured to vary the profile of the contact area 1a which can therefore be flat or deformed.

The contact organ 3 comprises at least one chain **31** defining the contact area 1a. In detail, it comprises a plurality of chains 31 suitably parallel to each other. More in detail, the member 3 comprises at least three chains 31 and for example four. Each chain 31 defines a first end and a second end.

Preferably each chain 31 is an articulated chain. It can comprise at least one mesh **311** and in detail a plurality of meshs 311 mutually constrained so as to suitably rotate idly.

The axis of rotation between the meshes is substantially parallel to the contact area 1a regardless of the profile of the contact area 1a.

The meshes 311 belonging to distinct chains 31 may not be constrained to each other so as to allow independent deformation of the chains 31.

Each chain 31 can comprise for each mesh 311 a cleat **312** defining at least one sector of the contact area 1a.

The cleat 312 can be made of elastomeric material or other material configured to absorb the forces/impacts upon contact between the contact area 1a and the support surface.

The contact area can be defined by the area enclosing (circumscribed) to the portion of said at least one chain of contact with the support surface, in detail to the meshs 311 in contact with the support surface and in more detail by the cleats 312 and in detail the surfaces of the cleats 312 in contact with the support surface.

The contact organ 3 can comprise a first support **32** constrained to each chain 31 at the first end and a second support **33** constrained to each chain 31 at the second end.

The first support 32 can be placed in correspondence with the front face.

The second support 33 can be placed in correspondence with the rear face.

The supports 32 and 33 enclose the at least one chain 31 between them.

The supports 32 and 33 identify the only constraints between meshes 311 of different chains 31.

The first support 32 is hinged to each chain 31 at the mesh 311 defining the first end allowing said meshes 311 to rotate with respect to the first support 32 suitably idly. The axis of rotation between the first support 32 and at least one chain 31 is substantially parallel to the contact area 1a.

The second support 33 is hinged to each chain 31 at the mesh 311 defining the second end allowing said mesh 311 to rotate with respect to the second support 33 suitably idly.

The axis of rotation between the second support 33 and at least one chain 31 is substantially parallel to the contact area 1a.

The robotic foot 1 comprises a constraint block **4** of the contact organ 3 to the attachment 2.

The constraint block 4 is constrained in a compliant way and hinged in detail to the contact organ 3.

It is constrained in a compliant way and hinged in detail to the attachment 2.

The constraint block 4 comprises a first arm **41** subtended between the first end of the chain 3 and attachment 2 and in detail between the first support 32 and attachment 2; and a second arm **42** subtended between the second end of the chain 3 and the attachment 2 and in detail between the second support 33 and the attachment 2.

The first arm 41 is constrained, suitably not directly, to the chain 3 at the first end. In detail, it is hinged to the chain 3 and to be more precise to the first support 32.

The second arm 42 is suitably not directly connected to the chain 3 at the second end. In detail, it is hinged to the chain 3 and to be more precise to the second support 33.

The constraint block 4 can comprise a first hinge **43** defining a first axis of rotation **1b.**

The first hinge 43 can be placed in correspondence with the front face and preferably external to the projection of the contact area 1a, said projection being almost perpendicular to the contact area 1a having a flat profile.

The first hinge 43 is configured to allow a first rotation, suitably idle, between the contact organ 3 and the constraint block 4. In particular, between the first arm 41 and the contact organ 3. Preferably the first rotation is between the first arm 41 and the first support 32 and therefore between the first arm 41 and at least the chain 31. The first axis of rotation 1b can be practically transverse to the support area 1a and preferably incident to the support area 1a suitably at least in a flat profile.

The first axis 1b can define with respect to the support area 1a a first angle of inclination with an amplitude almost lower than 30° in detail substantially comprised between 30° and 1°, preferably between 10° and 3°. The width of the first angle can be almost equal to 6°.

The constraint block 4 can comprise a second hinge **44** defining a second axis of rotation **1c.**

The second hinge 44 is configured to allow a second rotation, suitably idle, between the contact organ 3 and the constraint block 4, in particular, between the second arm 42 and the contact organ 3. Preferably the second rotation is between the second arm 41 and the second support 33 and therefore between second arm 41 and at least chain 31.

The second hinge 44 can be placed in correspondence with the rear face and preferably external to the projection of the contact area 1a, said projection being almost perpendicular to the contact area 1a having flat profile.

The second hinge 44 can be on the opposite side to the first hinge 43 with respect to the contact organ 3 and, to be more precise, to the contact area 1a.

The second axis of rotation 1c can have an inclination opposite to the first axis 1b. Preferably, the first axis 1b and the second axis 1c are substantially coplanar and to be precise, incident with each other.

The second axis 1c can be substantially transverse to the area 1a and in detail incident to the support area 1a suitably at least in a flat profile.

It can define with respect to the contact area 1a a second angle of inclination substantially less than 30° in detail substantially comprised between 30° and 1°, preferably between 10° and 3°. The width of the second angle can be almost equal to 6°.

It should be noted that the hinges 43 and 44 and therefore the rotations of the contact organ 3 around the first axis 1b and the second axis 1c can be mutually independent. Therefore, the first hinge 43 and the second hinge 44 are configured to allow distinct rotations around the first axis of rotation 1b and the second axis of rotation 1c causing a variation in the profile of the contact area 1a.

The constraint block 4 can comprise an additional hinge **45** defining an additional axis of rotation **1d.**

The additional hinge 45 is configured to allow an additional rotation, suitably idle, between the attachment 2 and the constraint block 4 and in particular between the attachment 2 and each arm 41 and 42.

The additional hinge 45 is configured to allow rotation between the arms 41 and 42 suitably idle.

The additional axis of rotation 1d can be practically parallel to the support area 1a and substantially incident in detail the projection of the centre of gravity of the contact area 1a having a flat profile.

The additional axis of rotation 1d can be substantially perpendicular to the first axis of rotation 1b.

First axis 1b and additional axis 1d can be skewed.

It should be noted that the first arm 41 can be configured to distance the first hinge 43 and the additional hinge 45 and then the first axis 1b and the additional axis 1d from each other. The minimum distance, calculated along the perpendicular to the contact area 1a when in flat profile, between said axes 1b and 1d is at least equal to 0.5 cm and in detail to 1 cm. It can be substantially comprised between 1 cm and 10 cm in detail between 2 cm and 5 cm and more precisely between 3 cm and 4 cm. The additional rotation axis 1d can be substantially perpendicular to the second rotation axis 1c.

Second axis 1c and additional axis 1d can be skewed.

The second arm 42 can be configured to distance the second hinge 44 and the additional hinge 45 and therefore the second axis 1c and the additional axis 1d from each other. The minimum distance, calculated along the perpendicular to the contact area 1a when in flat profile, between said axes 1c and 1d is at least equal to 0.5 cm and in detail to 1 cm. It can be substantially comprised between 1 cm and 10 cm in detail between 2 cm and 5 cm and more precisely between 3 cm and 4 cm. When the contact area 1a is in a flat profile, the additional axis 1d can be equidistant from the ends of the chains 31 in detail from the supports 32 and 33.

The constraint block 4 comprises elastic means **46** adapted to mutually spread the arms 41 and 42 keeping the at least one chain 31 under tension and therefore opposing a deformation of said chain 31 when in contact with an irregular and/or non-flat support surface.

The elastic means 46 can be associated with the additional hinge 45 so as to oppose a variation (in detail a decrease) in the spreading angle between the arms 41 and 42.

They can comprise a torsional spring connecting the two arms 41 to each other and 42.

The angle of spread can be centred on the additional axis of rotation 1d.

The constraint block 4 comprises a first limit switch **47** for the first arm 41 and a second limit switch **48** for the second arm 42.

Each limit switch 47 and 48 is configured to limit the mutual approach of the arms 41 and 42 and therefore defines a minimum value of the spreading angle between arms 41 and 42.

Said minimum value of the spreading angle is between 30° and 50° and for example substantially equal to 40°.

The robotic foot 1 can comprise a sensor for measuring the deformation of the contact area 1a and therefore configured to detect the profile of the contact area 1a, or rather if the contact area 1a is flat or irregular.

The sensors can comprise at least one sensor for measuring at least one between a first rotation around the first rotation axis 1b and a second rotation around the first axis of rotation 1c.

The at least one sensor can be in data connection with the control unit 13.

Said sensor system can comprise at least a first sensor **5** for measuring the first rotation around the first axis of rotation 1b in data connection with the aforementioned control unit 13. The control unit 13 is therefore configured to control the robot 10 according to the size of the first rotation.

The first sensor 5 is configured to measure the rotation between the first arm 41 and the contact organ 3.

The first sensor 5 can be an inertial sensor.

It can be integrated in the first arm 41 and/or integrated in the contact organ 3 and in detail in the first support 32.

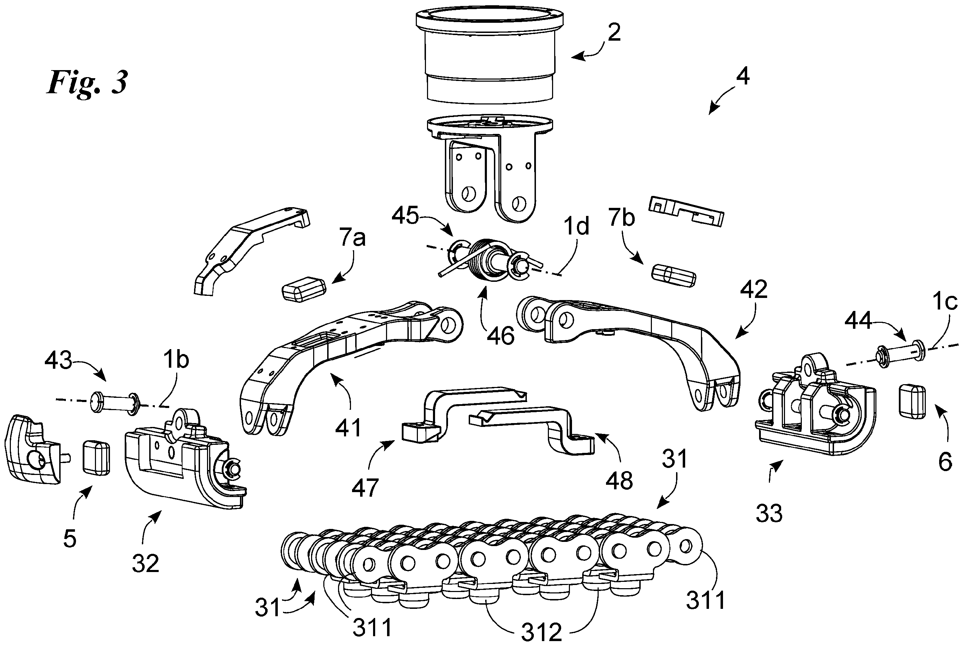

Preferably the sensors can comprise only one first sensor 5. Alternatively, the sensors can comprise two first sensors 5, one integrated in the first support 32 and one in the first arm 41 to estimate the relative angle between said components. To be precise, a sensor placed as 5 in Fig. 3 will hardly be able to measure the relative angle between 41 and 3, even more so an inertial sensor cannot. At least two (inertial) sensors are needed, one on 41 and the other on 32 to estimate the relative angle.

The measure of the first rotation can be stored in the robot database.

The sensors can comprise at least a second sensor **6** for measuring the second rotation around the second axis of rotation 1c in data connection with the control unit 13. The control unit 13 is therefore configured to control the robot 10 according to the measurement of the second rotation.

The second sensor 6 is configured to measure the rotation between the second arm 42 and the contact organ 3.

The measurement of the second rotation can be stored in the robot database. The sensors can comprise at least one additional sensor for measuring the additional rotation around the additional rotation axis 1d in data connection with said control unit 13.

The second sensor 6 can be an inertial sensor.

It can be integrated in the second arm 42 and/or integrated in the contact organ 3 and in detail in the first support 33.

Preferably the sensors can comprise only one second sensor 6. Alternatively, the sensors can comprise two second sensors 6, one integrated in the second support 33 and one in the second arm 42 to estimate the relative angle between said components.

The control unit 13 is therefore configured to control the robot 10 according to the extent of the additional rotation.

The additional sensor is configured to measure the rotation between the attachment 2 and at least one arm 41 and/or 42 and optionally between the arms 41 and 42. The additional sensor can be an inertial sensor.

Preferably the sensors can comprise an additional sensor for each arm in data connection with the control unit 13.

The measurement of each additional rotation can be stored in the robot database. It can thus comprise a first additional sensor **7a** for measuring the additional first rotation between the first arm 41 and attachment 2 around the additional rotation axis 1d; and a second additional sensor **7b** for measuring the additional second rotation between second arm 42 and attachment 2 around the additional rotation axis 1d.

The first additional sensor 7a can be integrated into the first arm 41.

It can be an inertial sensor.

The second additional sensor 7b can be integrated into the second arm 42.

It can be an inertial sensor.

The control unit 13 is configured to control the robot 10 as a function of the extent of the additional rotation of the second arm 42 with respect to the attachment 2. It is therefore configured to control the robot 10 as a function of the extent of the additional rotation of the first arm 41 with respect to attachment 2.

The control unit 13 is configured to control the motor 12 of the robot 10 and therefore the movement of at least one limb 11 (or rather the movements of the robot 10 on the support surface) as a function of at least one measured measurement from the first sensor 5, from the at least one additional sensor (in detail both the additional sensors 7a and 7b) and preferably from the second sensor 6.

In detail it is configured to define the profile of the contact area 1a of each of the at least one foot 1 of a robot 10 according to the measurements obtained from the sensors of said foot 1 and therefore controlling the robot 10 according to the profile of said at least area 1a.

The control unit 13 is configured to control the movement of at least one limb 11 defining for the robot a condition of equilibrium on the support surface.

For this purpose, it can comprise a robot database comprising the physical and/or mechanical characteristics of the robot 10 (in detail of each module) so as to allow the unit to determine which movement to perform to define an equilibrium condition.

Finally, it should be noted that the robotic foot 1 can be passive and therefore devoid of motors. The contact area 1a is therefore configured to remain flat (thanks to the elastic means 46) and deform only when pressed against a suitably non-flat and therefore irregular support surface.

The operation of the robotic foot 1 and therefore of the robot 10 previously described in structural terms is as follows.

When the robot 10 moves along a support surface 1a, the control unit 13 commands, for example, the lifting of the foot 10 from the support surface and its resting in a different point of the support surface.

Upon lifting, the contact area 1a detaches from the support surface and therefore the weight of the robot 10 no longer presses the contact area 1a against the support surface. Consequently, the chains 31 are subject only to the action of the elastic means 46 which, by spreading the arms 41 and 42, stretch the chains 31 which therefore define a contact area 1a with a flat profile.

The rotation of the arms 41 and 42, measured by at least the additional sensors 7a and 7b, is detected by the control unit 13 which can thus identify the flat profile of the area 1a.

It is highlighted how the lifting of the foot 1, removing a support from the robot 10, can bring the robot 10 to a non-equilibrium condition. This condition can be identified by the unit by means of special sensors of the robot and/or by detecting a rotation by the sensors of at least a second foot 1 of the robot 10 different from the one being moved and still in contact with the support surface.

Once the non-equilibrium condition has been detected, the control unit 13 defines, for example thanks to the robot database, a new equilibrium condition and therefore the profile that the contact areas 1a must assume in order to obtain said configuration.

Then the unit commands a displacement of a module, such as to vary the shape of the contact area 1a of at least one said second foot 1. For example, it can command the motor 12 to move the limb 11 corresponding to the second foot 1 so as to alter the profile of the area 1a (corresponding to a modification of the interaction and therefore of the forces exchanged between area 1a and the contact surface) until the profile suitable for the new equilibrium condition is obtained.

When the foot 1 rests on said new point of the support surface, the contact area 1a of this foot 1 can acquire a deformed profile due to the pressure given by the unloading of the weight of the robot 10 in said contact area 1a against the support surface. This deformation of the area 1a involves a rotation of the constraint block 4 with respect to the attachment 2 (for example an approach of the arms 41 and 42 in opposition to the elastic means 46) and/or a rotation of the contact organ 3 with respect to the block constraint 4.

The amplitude of these rotations, detected by the sensors 5, 7a and 7b and if present 6, can be exploited by the control unit 13 to acquire the profile of the contact area 1a and/or command a new movement of robot 10.

It can be seen how the support of foot 1 can define a condition of non-equilibrium and impose the assumption of a new condition of equilibrium.

The robotic foot 1 and therefore the robot 10 according to the invention achieve important advantages.

In fact, the robotic foot 1 is able to guarantee excellent stability on any type of support surface and therefore also in difficult external environments and/or on soft and deformable ground such as sand or snow.

In fact, the adoption of one or more chains 31, suitably with meshes 311 of different separate chains 31, allows the contact area 1a to perfectly adapt its shape to each support surface and therefore to all terrains. In particular, this adjustment allows the foot 1 to maximize the contact area 1a actually in contact with the support surface and therefore guarantees a greater grip.

The stability is also given by the fact that the robotic foot 1, thanks to said sensors, is able to detect the profile of the contact area 1a and therefore to determine the reaction of the ground (in the direction towards and suitably in module thanks to the database robot). This aspect translates into the possibility of adapting the profile of the contact area 1a in such a way as to have a reaction with the support surface suitable for creating a condition of equilibrium for the robot 10.

It is evident that this result was obtained with extremely reduced sensors and therefore easy to manage.

Another important advantage is represented by the constructive simplicity and therefore by the reduced costs and design simplicity of the foot 1 and consequently of the robot 10.

The aforementioned advantages also result in a high ability of the foot 1 to imitate the compliance and adaptability of the human feet thus giving the robot 10 high capabilities.

The invention is susceptible of variants falling within the scope of the inventive concept defined by the claims. In this context, all the details can be replaced by equivalent elements and the materials, shapes and dimensions can be any.

## Claims

1. Robotic foot (1) configured to be placed on a support surface and comprising:
- an attachment (2) of said robotic foot (1) to an external object;
- at least one chain (31) defining a contact area (1a) of said robotic foot (1) with said support surface;
- a first arm (41) joined to said chain (31) in correspondence of a first end of said chain (31) and hinged to said attachment (2);
- a second arm (42) hinged to said attachment (2) and joined to said chain (31) in correspondence of a second end of said chain (31); and **characterised by** comprising:
- elastic means (46) suitable for mutually spread said arms (41,42) while keeping said chain (31) tense and by opposing to a deformation of said chain (31) when in contact with said irregular supporting surface;
and
a first limit switch (47) for said first arm (41) and a second limit switch (48) for said second arm (42), wherein said limit switches (47, 48) are configured to limit the mutual combination of said arms (41, 42) defining a minimum value of the spreading angle between said arms (41, 42) substantially comprised between 30 ° and 50 °.

2. Robotic foot (1) according to claim 1, comprising a supplementary hinge (45) defining an additional axis of rotation (1d) between said arms (41,42) and said attachment (2); wherein said supplementary axis of rotation (1d) is parallel to said contact area (1a).

3. Robotic foot (1) according to at least one preceding claim, comprising at least three of said chain (31).

4. Robotic foot (1) according to the preceding claim, wherein said chains (31) are articulated chains and each of them comprises a plurality of meshes (311) mutually joined so as to rotate among themselves.

5. Robotic foot (1) according to previous claim, wherein the axis of rotation between said meshes (311) is substantially parallel to said contact area (1a).

6. Robotic foot (1) according to at least one claim 4-5, wherein said meshes (311) belonging to different chains (31) are not joined among themselves so as to allow independent deformation of said chains (31).

7. Robotic foot (1) according to at least one claim 4-6, wherein each of said chains (319) comprises for each of said meshes (311) a cleat (312) defining at least one sector of said contact area (1a) made in elastomeric material.

8. Robotic foot (1) according to at least one preceding claim, wherein said contact organ (3) comprises a first support (32) joined to said chain (31) in correspondence of said first end and a second support (33) joined to each said chain (31) in correspondence of said second end; wherein said first arm (41) is joined to said first support (32) which therefore is interposed between said chain (31) and said first arm (41); and wherein said second arm (42) is joined to said first support (32) which therefore is interposed between said chain (31) and said second arm (42).

9. Robot comprising at least one robotic foot (1) according to at least one preceding claim.

## Patentansprüche

1. Roboterfuß (1), der konfiguriert ist, um auf einer Stützfläche platziert zu werden, und umfassend:
- eine Befestigung (2) des Roboterfußes (1) an einem externen Objekt;
- mindestens eine Kette (31), die einen Kontaktbereich (1a) des Roboterfußes (1) mit der Stützfläche definiert;
- einen ersten Arm (41), der mit der Kette (31) an einem ersten Ende der Kette (31) verbunden ist und an der Befestigung (2) scharniert wird;
- einen zweiten Arm (42), der an der Befestigung (2) scharniert wird und mit der Kette (31) an einem zweiten Ende der Kette (31) verbunden ist;
und **dadurch gekennzeichnet dass** er umfasst:
- Federmittel (46), die geeignet sind, die Arme (41,42) gegenseitig zu strecken, während die Kette (31) gespannt bleibt, und einer Verformung der Kette (31) entgegenzuwirken, wenn sie mit der unregelmäßigen Stützfläche in Kontakt steht; und
einen ersten Endschalter (47) für den ersten Arm (41) und einen zweiten Endschalter (48) für den zweiten Arm (42), wobei die Endschalter (47, 48) konfiguriert sind, die gegenseitige Kombination der Arme (41, 42) zu begrenzen, wobei ein Mindestwert des Streckwinkels zwischen den Armen (41, 42) im Wesentlichen zwischen 30° und 50° liegt.

2. Roboterfuß (1) nach Anspruch 1, umfassend ein zusätzliches Scharnier (45), das eine zusätzliche Drehachse (1d) zwischen den Armen (41,42) und der Befestigung (2) definiert; wobei die zusätzliche Drehachse (1d) parallel zu dem Kontaktbereich (1a) ist.

3. Roboterfuß (1) nach mindestens einem der vorhergehenden Ansprüche, umfassend mindestens drei der Ketten (31).

4. Roboterfuß (1) nach dem vorhergehenden Anspruch, wobei die Ketten (31) Gelenkketten sind und wobei jede Kette eine Mehrzahl von Gliedern (311) umfasst, die gegenseitig so verbunden sind, dass sie sich untereinander drehen.

5. Roboterfuß (1) nach dem vorhergehenden Anspruch, wobei die Drehachse zwischen den Gliedern (311) im Wesentlichen parallel zu dem Kontaktbereich (1a) ist.

6. Roboterfuß (1) nach mindestens einem der Ansprüche 4-5, wobei die Glieder (311), die zu verschiedenen Ketten (31) gehören, nicht miteinander verbunden sind, so dass eine unabhängige Verformung der Ketten (31) ermöglichen.

7. Roboterfuß (1) nach mindestens einem der Ansprüche 4-6, wobei jede der Ketten (319) für jedes der Glieder (311) einen Keil (312) umfasst, der mindestens einen Abschnitt des Kontaktbereichs (1a) definiert, der aus Elastomerwerkstoff besteht.

8. Roboterfuß (1) nach mindestens einem der vorhergehenden Ansprüche, wobei das Kontaktglied (3) einen ersten Träger (32) umfasst, der mit der Kette (31) an dem ersten Endes verbunden ist, und einen zweiten Träger (33), der mit jeder Kette (31) an dem zweiten Endes verbunden ist; wobei der erste Arm (41) mit dem ersten Träger (32) verbunden ist, der daher zwischen der Kette (31) und dem ersten Arm (41) liegt; und wobei der zweite Arm (42) mit dem ersten Träger (32) verbunden ist, der daher zwischen der Kette (31) und dem zweiten Arm (42) liegt.

9. Roboter umfassend mindestens einen Roboterfuß (1) nach mindestens einem der vorhergehenden Ansprüche.

## Revendications

1. Pied robotique (1) configuré pour être placé sur une surface de support et comprenant :
- une fixation (2) dudit pied robotique (1) à un objet externe ;
- au moins une chaîne (31) définissant une zone de contact (1a) dudit pied robotique (1) avec ladite surface de support ;
- un premier bras (41) relié à ladite chaîne (31) en correspondance d'une première extrémité de ladite chaîne (31) et articulé à ladite fixation (2) ;
- un second bras (42) articulé à ladite fixation (2) et relié à ladite chaîne (31) en correspondance d'une seconde extrémité de ladite chaîne (31) ;
et **caractérisé par** le fait de comprendre :
- des moyens élastiques (46) appropriés pour écarter mutuellement lesdits bras (41,42) tout en maintenant ladite chaîne (31) tendue et en s'opposant à une déformation de ladite chaîne (31) lorsqu'elle est en contact avec ladite surface de support irrégulière ;
et un premier fin de course (47) pour ledit premier bras (41) et un second fin de course (48) pour ledit second bras (42), où lesdits fins de course (47, 48) sont configurés pour limiter la combinaison mutuelle desdits bras (41, 42) définissant une valeur minimale de l'angle d'écartement entre lesdits bras (41, 42) substantiellement comprise entre 30° et 50°.

2. Pied robotique (1) selon la revendication 1, comprenant une charnière supplémentaire (45) définissant un axe de rotation additionnel (1 d) entre lesdits bras (41,42) et ladite fixation (2) ; où ledit axe de rotation supplémentaire (1 d) est parallèle à ladite zone de contact (1a).

3. Pied robotique (1) selon au moins une revendication précédente, comprenant au moins trois desdites chaînes (31).

4. Pied robotique (1) selon la revendication précédente, où lesdites chaînes (31) sont des chaînes articulées et chacune d'elles comprend une pluralité de maillons (311) reliés mutuellement de manière à pouvoir tourner entre eux.

5. Pied robotique (1) selon la revendication précédente, où l'axe de rotation entre lesdits maillons (311) est substantiellement parallèle à ladite zone de contact (1 a).

6. Pied robotique (1) selon au moins une des revendications 4-5, où lesdits maillons (311) appartenant à différentes chaînes (31) ne sont pas reliés entre eux de manière à permettre une déformation indépendante desdites chaînes (31).

7. Pied robotique (1) selon au moins une revendication 4-6, où chacune desdites chaînes (319) comprend pour chacun desdits maillons (311) un patin (312) définissant au moins un secteur de ladite zone de contact (1 a) réalisé en matériau élastomère.

8. Pied robotique (1) selon au moins une revendication précédente, où ledit organe de contact (3) comprend un premier support (32) relié à ladite chaîne (31) en correspondance de ladite première extrémité et un second support (33) relié à chaque ladite chaîne (31) en correspondance de ladite seconde extrémité ; où ledit premier bras (41) est relié audit premier support (32) qui est donc interposé entre ladite chaîne (31) et ledit premier bras (41) ; et où ledit second bras (42) est relié audit premier support (32) qui est donc interposé entre ladite chaîne (31) et ledit second bras (42).

9. Robot comprenant au moins un pied robotique (1) selon au moins une revendication précédente.
